# EUROPEAN PATENT SPECIFICATION

(11) **EP 3 034 270 B1**
(45) Date of publication and mention of the grant of the patent: **06.11.2019**
(21) Application number: 15199668.3
(22) Date of filing: 11.12.2015
(51) Int. Cl.: B29C 51/04, B29C 51/18

(54) **THERMOFORMING APPARATUS WITH LOADING DEVICE**
THERMOFORMVORRICHTUNG MIT BESCHICKUNGSVORRICHTUNG
APPAREIL POUR LE THERMOFORMAGE AVEC APPAREIL D'ALIMENTAGE

(30) Priority: 15.12.2014 IT MO20140359
(43) Date of publication of application: 22.06.2016
(73) Proprietor: C.M.S. S.p.A., 24019 Zogno (Bergamo) (IT)
(72) Inventor: VILLA, Giuseppe, 21100 Varese (IT); ROTA, Angelo, 24030 Almenno san Bartolomeo (BG) (IT)
(74) Representative: Villanova, Massimo

(56) References cited:
- EP-A1- 1 182 022
- EP-A1- 2 052 979
- WO-A1-2004/069522
- US-B1- 6 379 606

## Description

### Background of the invention

The invention relates to a device for loading equipment on a plug assist plate, in particular to enable two or more equipments to be loaded, selectively one at a time, on the same plug assist plate.

Specifically but not exclusively, the device in question may be usefully used in a thermoforming apparatus having a plug assist plate that is movable between an equipment loading position and an equipment use position.

The term equipment is defined here for any device that is usable in the context of a thermoforming apparatus, such as for example cutting device, welding device, milling device, quality control device, clamping device, half moulds, etc.

Thermoforming apparatuses are already known that are provided with systems for selective loading of equipment. For example, a loading system is known having a rotating carousel that is able to carry up to four equipments. A loading system is also known having four distinct shuttles, each having an equipment.

US 6379606 B1 discloses a twin sheet thermoforming apparatus with clamping frames for holding sheets to be formed through successive processing stations. WO 2004/069522 A1 discloses a plant for the production of polyurethane articles wherein a movable plane picks up a segment of film and transfer it to the molding apparatus. EP 1182022 A1 discloses an apparatus for vacuum forming wherein a carriage transports moldings into a finishing machine and another carriage stores tools used for processing the vacuum formed components.

EP2052979 discloses an apparatus according to the preamble of claim 1.

### Summary of the invention

One object of the invention is to make a device for loading equipment that is an improvement on prior-art loading systems.

This objective is reached by an apparatus according to claim 1.

One advantage is to supply a device for loading equipment that is constructionally simple and cheap.

One advantage is to enable simple and rapid selective loading of a plurality of equipments.

One advantage is to provide a device having relatively reduced dimensions to enable a large number of equipments to be loaded, for example four.

Such objects and advantages and still others are all reached by the device according to one or more of the claims listed below.

In one example, a device for loading equipment on a plug assist plate comprises a first frame slidable on guides, a first equipment carried by the first frame, a second frame slidable on guides, a second equipment carried by the second frame, a shuttle that is movable between a loading position and a rest position, first and second engaging means carried by the shuttle to engage, respectively, the first frame and the second frame, wherein when the first engaging means and/or the second engaging means are in an engagement position, the shuttle can drag with it the first frame and/or the second frame in its movement between the loading and the rest positions.

### Brief description of the drawings

The invention can be better understood with reference to the attached drawings that show an embodiment thereof by way of non-limiting example.

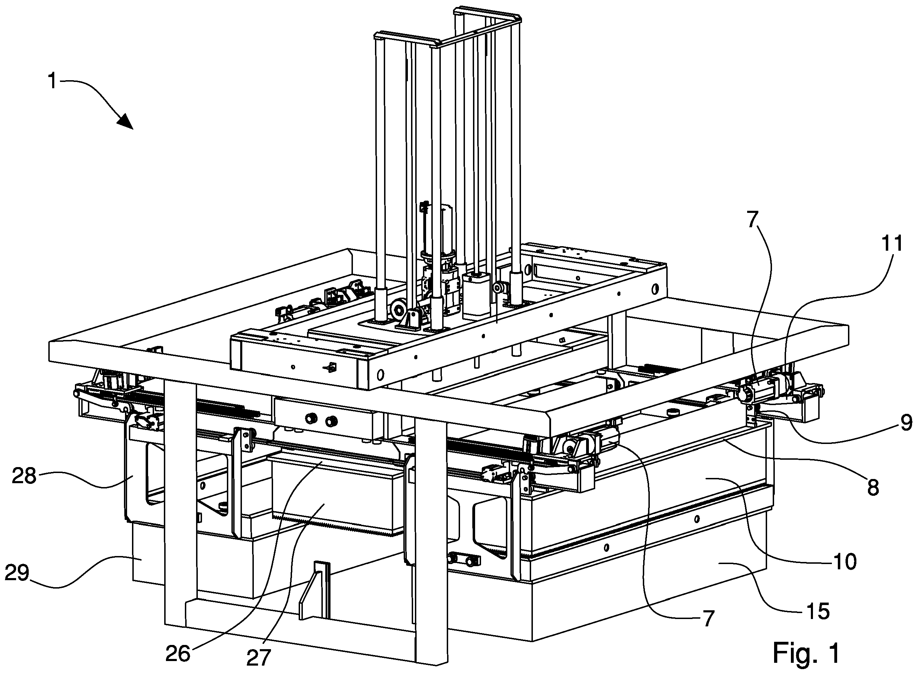

Figure 1 is a perspective view of a part of a thermoforming apparatus provided with an embodiment of a loading device made according to the present invention.
Figure 2 is an enlarged detail of figure 1.
Figure 3 is a side view in a vertical elevation of the apparatus in figure 1.

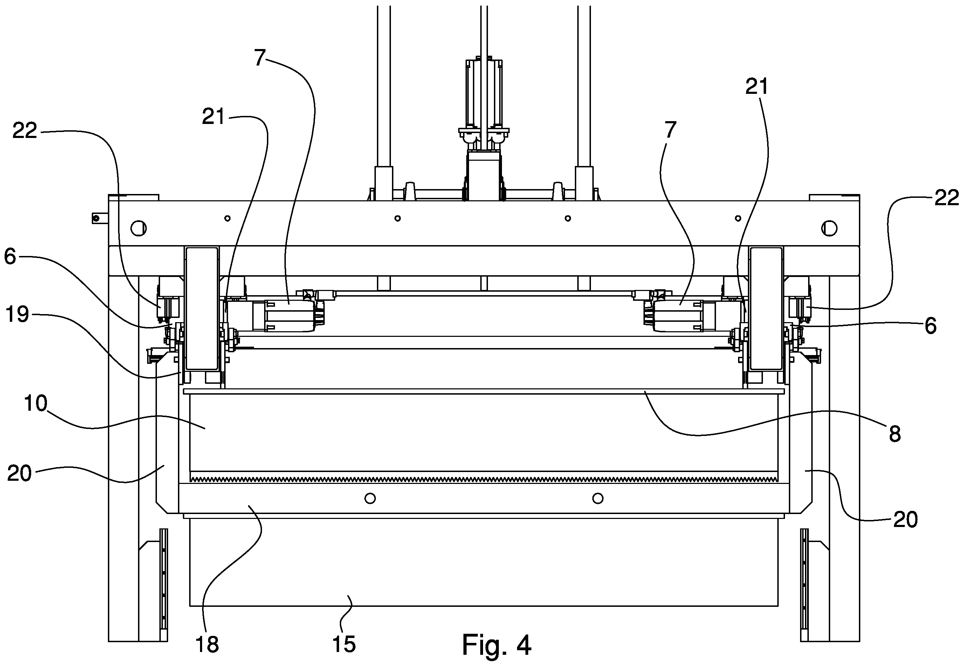

Figure 4 is a side view from the left of figure 3.
Figures 5 to 8 are side views as in figure 3 with the apparatus in four different work configurations.

### Detailed description

With reference to the aforesaid figures, with 1 a thermoforming apparatus has been indicated (that is shown only partially) comprising at least one plug assist plate 2 that is movable in a movement axis. The movement axis may be, in particular, vertical. The plug assist plate 2 is arranged for receiving at least one equipment in an equipment loading position and for taking the aforesaid equipment to a work position. The loading position may be arranged, as in this case, above the work position. For ease of representation, the portion (of known type) of thermoforming apparatus 1 has not been illustrated that operates in the work position in collaboration with the equipment carried by the plug assist plate 2 that has descended to the lowered work position.

The equipment may comprise any device that is usable in a thermoforming apparatus, such as for example half moulds, cutting devices, welding devices, milling devices, quality control devices, clamping devices, etc.

The thermoforming apparatus 1 comprises a loading device configured for loading the equipment on the plug assist plate 2. The loading device will be disclosed in detail in the continuation of the present description.

The loading device comprises first shuttle means 3 that is movable (forwards and backwards in a horizontal direction), at least between a first zone 4, which is at the aforesaid loading position in which an equipment is loaded onto the plug assist plate 2, and a second zone 5 that is far from the first zone 4. The first shuttle means 3 may be, for example, coupled with first sliding guides 23, for example linear (straight) sliding guides 23.

The first shuttle means 3 may comprise, as in this embodiment, two movable carriages 6, each of which is driven by a respective motor 7. The two carriages 6 are arranged alongside one another, at a distance from one another, on two opposite sides of the loading device. The two motors 7 of the first shuttle means 3 may be connected together by electronic control means arranged for moving jointly the two carriages 6 in mutual collaboration.

The loading device may comprise first supporting means 8 that is movable on first guiding means 9 at least between the first zone 4 and the second zone 5. The first guiding means 9 may comprise, for example, two first (straight) linear guides arranged on the two opposite sides of the loading device. The first supporting means 8 may comprise, in particular, a first frame that is movable on the first guiding means 9 and extends transversely to the movement direction thereof.

The loading device may comprise a first equipment 10 (of known type and which is not illustrated in detail) carried by the first supporting means 8 and intended to be loaded on the plug assist plate 2 in the first zone 4.

The loading device may comprise first removable engaging means 11 arranged for adopting at least one engagement position and at least one disengagement position in which, respectively, the first shuttle means 3 is or is not engaged with the first supporting means 8 and/or with the first equipment 10 to drag or respectively not to drag the first supporting means 8 in the movement between the first (central) zone 4 and the second (lateral) zone 5.

The first engaging means 11 may comprise, in particular, at least one first movable member carried by the first shuttle means 3 and provided with at least one ridge/groove intended for removable joint coupling with a corresponding groove/ridge carried by the first supporting means 8 or by the first equipment 10. The first movable member may be, for example, a lever that is rotatable around a rotating pin 12, in which an end of the lever is coupled with the pivot and the opposite end has a recess that dovetails removably with a protrusion (pin) fixed to the first supporting means 8. The first engaging means 11 may comprise, in particular, two first movable members carried by the first shuttle means 3 and arranged on the two opposite sides of the loading device.

In particular the first engaging means 11 is movable between a lowered position, in which it engages the first supporting means 8, and a raised position, in which it leaves the first supporting means 8 free. The first engaging means 11 can be lowered and raised by a motorised command around at least one rotating pin 12.

The loading device may comprise second supporting means 13 that is movable on second guiding means 14 at least between the first zone 4 and the second zone 5. The second guiding means 14 may comprise, for example, two second (straight) linear guides arranged on the two opposite sides of the loading device and placed alongside parallel to the two first linear guides comprised in the first guiding means 9. The second supporting means 13 may comprise, in particular, a second frame that is movable on the second guiding means 14 and extends transversely to the movement direction thereof.

The loading device may comprise a second equipment 15 carried by the second supporting means 13 and intended to be loaded on the plug assist plate 2 in the first zone 4. The second equipment 15 is arranged, for example, below the first equipment 10 and may be movable with respect to the first equipment 10 remaining therebelow during movement.

The loading device may comprise second removable engaging means 16 arranged for adopting at least one engagement position and at least one disengagement position in which, respectively, the first shuttle means 3 is or is not engaged with the second supporting means 13 and/or with the second equipment 15 to drag them or not to drag them in the movement between the first zone 4 and the second zone 5.

The second engaging means 16 may comprise at least one second movable member carried by the first shuttle means 3 and provided with at least one ridge/groove intended for removable joint coupling with a corresponding groove/ridge carried by the second supporting means 13 or by the second equipment 15. The second movable member may be rotatable around a rotating pin 17.

The second engaging means 16 may be, as in this embodiment, structured in a similar manner to the first engaging means 11.

The second supporting means 13 may comprise an (upper) distal portion 18 arranged far from the second equipment 15 and a (lower) proximal portion 19 arranged near the second equipment 15. The second supporting means 13 may comprise bridge means 20 arranged for connecting together the distal portion 18 and the proximal portion 19. The first equipment 10 is arranged at least partly in a space situated at a height comprised between the distal portion 18 and the proximal portion 19 when the first supporting means 8 and the second supporting means 13 are vertically above one another, for example when they are simultaneously in the first zone 4 or in the second zone 5. The bridge means 20 may be arranged externally on at least one side of the first equipment 10 in such a manner as not to interfere therewith during a corresponding movement of the first and of the second supporting means 8 and 13 between the first and the second zone 4 and 5.

The loading device may comprise first actuator means 21 carried by the first shuttle means 3 to drive the movement of the first engaging means 11 between the engagement and disengagement positions. The loading device may comprise second actuator means 22 carried by the first shuttle means 3 to drive the movement of the second engaging means 16 between the engagement and disengagement positions, in such a manner that the first engaging means 11 and the second engaging means 16 are drivable independently of one another. The first actuator means 11 and/or the second actuator means 16 may comprise at least one first linear actuator and/or at least one second linear actuator. In this embodiment, the first actuator means 11 and the second actuator means 16 comprise, respectively, two first linear actuators (one for each of the two first movable members) and two second linear actuators (one for each of the two second movable members).

The first supporting means 8 and the second supporting means 13 may be movable, on the respective first guiding means 9 and second guiding means 14, parallel to the (linear) movement of the first shuttle means 3 on the first sliding guides 23.

The loading device may comprise a second structure, which is similar to what has been disclosed above, to carry another two equipments. The second structure may be arranged, in particular, on a zone that is diametrically opposite the first structure, with respect to a central zone corresponding to the loading position of the equipment.

In particular, the second structure may comprise second shuttle means 24 that is movable at least between the first zone 4 and a third zone 25 that is far from the first zone 4 and from the second zone 5. The third zone 25 is diametrically opposite the second zone 5. The first zone 4 is arranged in the center, whereas the second and third zone 5 and 25 are arranged on the sides.

The loading device may comprise third supporting means 26 (similar to the first supporting means 8 of the first structure) that is movable on third guiding means (similar to the first guiding means 9 of the first structure) at least between the first zone 4 and the third zone 25.

The loading device may comprise a third equipment 27 carried by the third supporting means 26 and intended to be loaded on the plug assist plate 2 in the first zone 4 (equipment loading position).

The loading device may comprise third removable engaging means arranged for adopting at least one engagement position and at least one disengagement position wherein, respectively, the second shuttle means 24 is or is not engaged with the third supporting means 26 and with the third equipment 27 to drag them or not to drag them in the movement between the first zone 4 and the third zone 25. The third engaging means may be, as in this embodiment, similar to the first engaging means of the first structure, reproducing, in particular, the specific characteristics thereof.

The loading device may comprise fourth supporting means 28 (similar to the second supporting means 13 of the first structure) that is movable on fourth guiding means (similar to the second guiding means 14 of the first structure) at least between the first zone 4 and the third zone 25.

The loading device may comprise a fourth equipment 29 carried by the fourth supporting means 28 and intended to be loaded on the plug assist plate 2 in the first zone 4.

The loading device may comprise fourth removable engaging means arranged for adopting at least one engagement position and at least one disengagement position in which, respectively, the second shuttle means 24 is or is not engaged with the fourth supporting means 28 and with the fourth equipment 29 to drag them or not to drag them in the movement between the first zone 4 and the third zone 25. The fourth engaging means may be, as in this embodiment, similar to the second engaging means of the first structure, reproducing, in particular, the specific characteristics thereof.

The second shuttle means 24 may be, for example, coupled with second guiding portions 30, for example linear (straight), in particular aligned with the first sliding guides 23.

The first guiding means 9 and the third guiding means may have in common, at the first zone 4 or equipment loading position, at least one shared first guiding portion. The first guiding portion may be movable together with the plug assist plate 2 along the movement axis.

The second guiding means 14 and the fourth guiding means may have in common, at the first zone 4 or equipment loading position, at least one shared second guiding portion 31. The second guiding portion 31 may be movable together with the plug assist plate 2 along the movement axis. The shared first guiding portion (not visible in the attached figures) is arranged more internally than the second guiding portion 31.

The second shuttle means 24 may comprise (similarly to the first shuttle means 3) two movable carriages 6 each of which is driven by a respective motor 7. The two motors 7 of the second shuttle means 24 may be connected together by electronic control means arranged for moving jointly the two carriages.

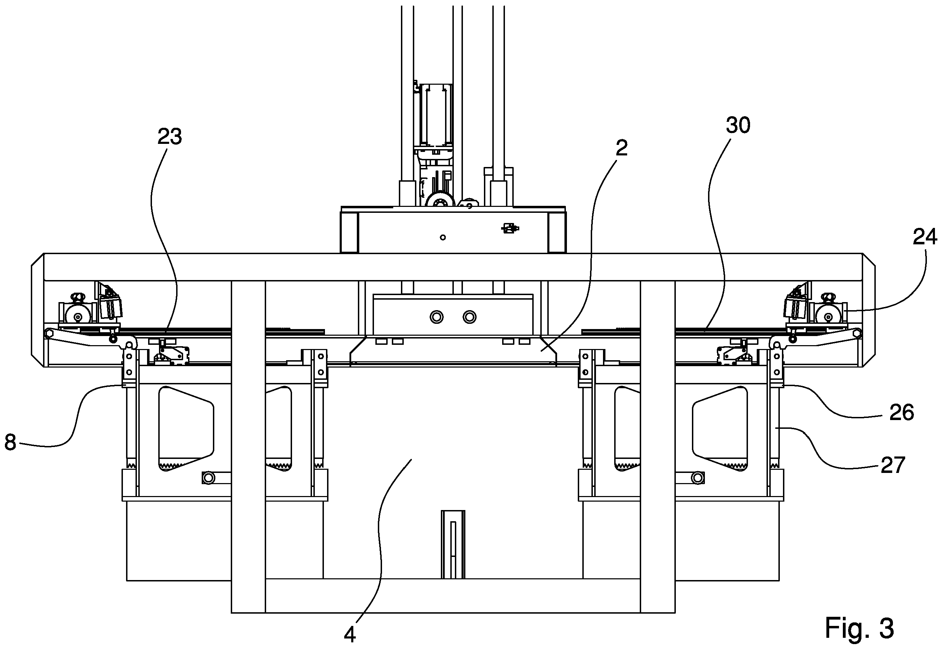

The operation of the loading device is as follows, from the configuration of figure 3 in which all four equipments 10, 15, 27 and 29 are in the rest position (second zone 5 and third zone 25) far from the loading position (first zone 4).

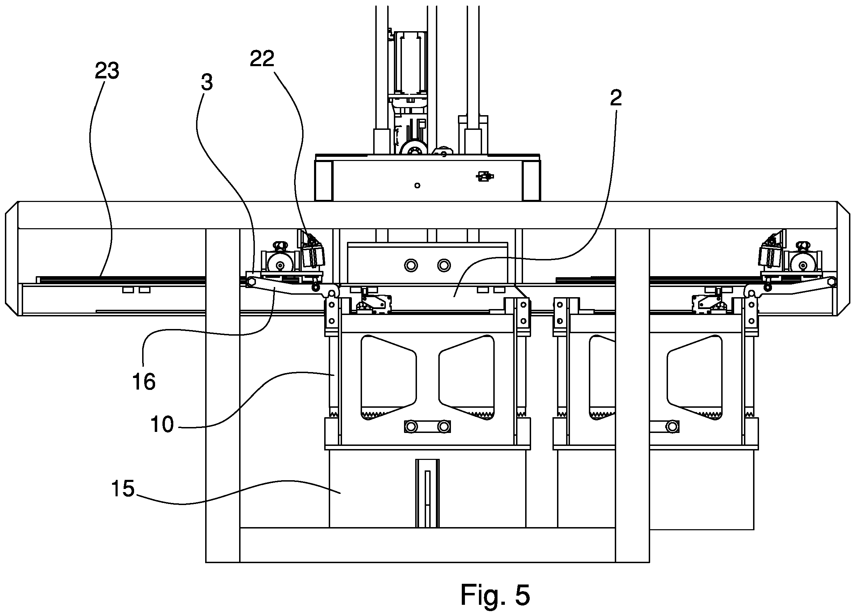

To load onto the plug assist plate 2, for example, the second equipment 15, arranged on the first structure (to the left in figure 3) below the first equipment 10, the first and the second engaging means 11 and 16 are taken to the (lowered) engagement position to engage the first and the second supporting means 8 and 13 of the first and of the second equipment 10 and 15, thus the first shuttle means 3 is driven to move to the center (to the first zone 4), i.e. to the loading position. The first shuttle means 3 (being engaged with the first and second supporting means 8 and 13 by means of the first and the second engaging means 11 and 16) will thus drag with itself both the first equipment 10 and the second equipment 15, to arrive at the first zone 4 or loading position (figure 5).

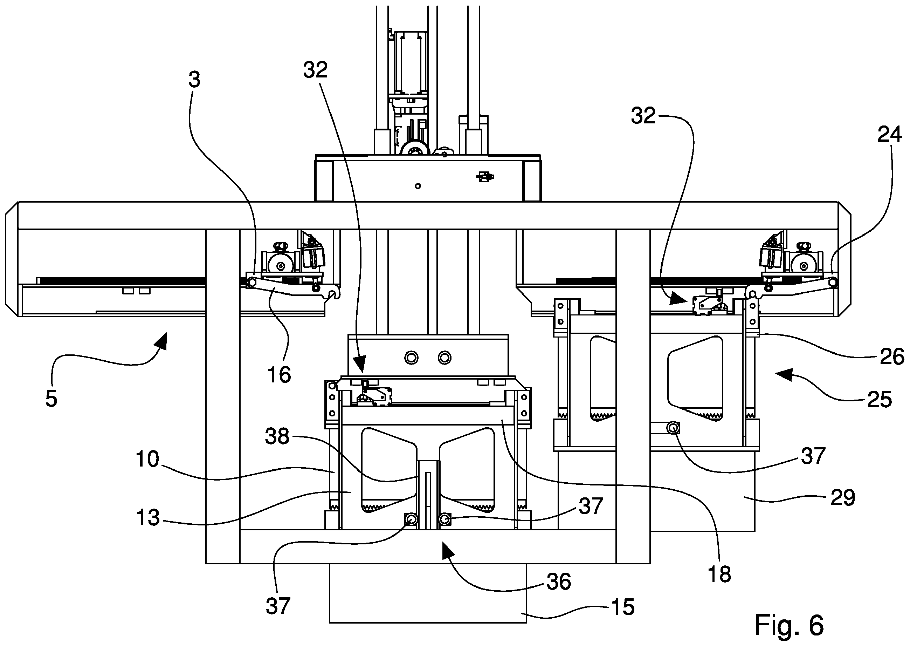

In this configuration the first and the second supporting means 8 and 13 are coupled with the first and with the second guiding portion 30 and 31, each of which is carried integrally by the plug assist plate 2. At this point the plug assist plate 2 can move (downwards), driven by the motor means (of known type) thereof, to go to the work position in such a manner that the second equipment 15 (arranged below) is enabled for work (figure 6).

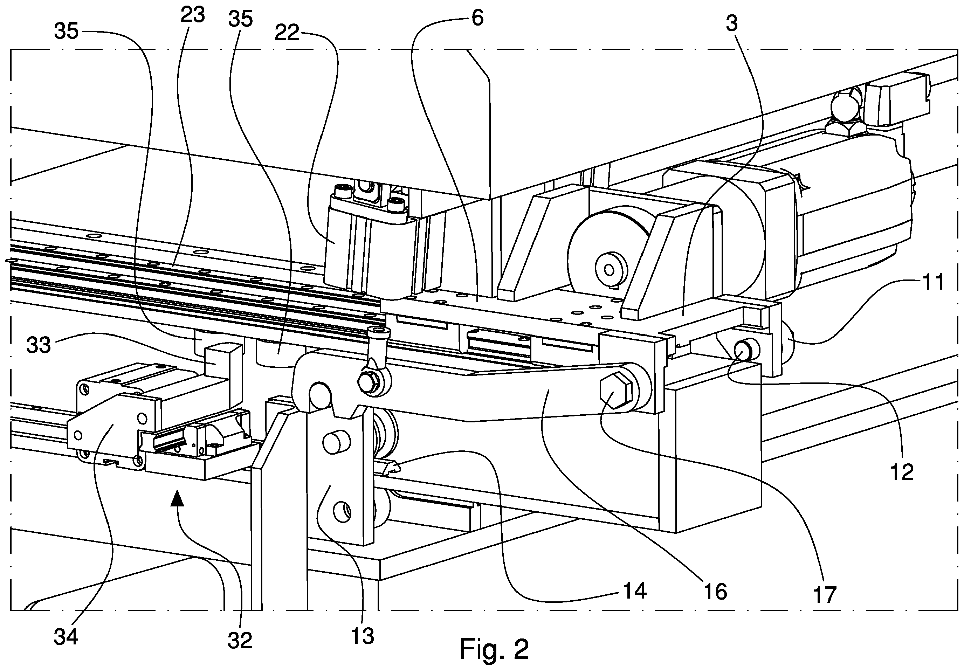

The device may comprise, as in this embodiment, a fixing system 32 for fixing the equipment on the movable part of the plug assist plate. When the first shuttle means 3 has taken the equipment to the first zone 4, the equipment can be fixed integrally to the movable part of the plug assist plate by the fixing system 32 (also visible in figure 2). The fixing system 32 may comprise a pin 33 (that is movable at the command of an actuator 34) that is inserted between two revolving elements 35 (rollers or bearings) for preventing an undesired translation (in a horizontal direction) of the equipment. The pin 33 may be carried by the equipment and the two revolving elements 35 may be carried by the movable part of the plug assist plate.

The fixing system 32 may be useful because, during the descent of the plug assist plate, the first shuttle means 3 will remain on the part of the fixed guide (see figure 6), disconnecting from the pin used to move the equipment to the first zone 4. In this disconnected condition, the equipment would be free to move, no longer being anchored to the translation system, so the fixing system 32 can intervene to lock the equipment with respect to the movable part of the plug assist plate.

It is possible to set up, as in this case, an equipment centering or aligning device 36. With reference to figure 6, the equipment 15, which in general has to work in collaboration with another equipment (which is not shown) arranged on the lower part of the machine, may need to be aligned on this other equipment. Alignment or centering may be guaranteed by the centering device 36 that, as in this embodiment, may comprise at least two revolving elements 37 (rollers or bearings) mounted on the second supporting means 13 that supports the equipment 15. These revolving elements 37, when the plug assist plate 2 is at the height corresponding to the work position of the equipment 15, couple slidably with reference means 38 (for example a centering element extending vertically) arranged (in a fixed manner) on the frame of the plug assist plate. This frame will in turn be integral with the lower part of the machine.

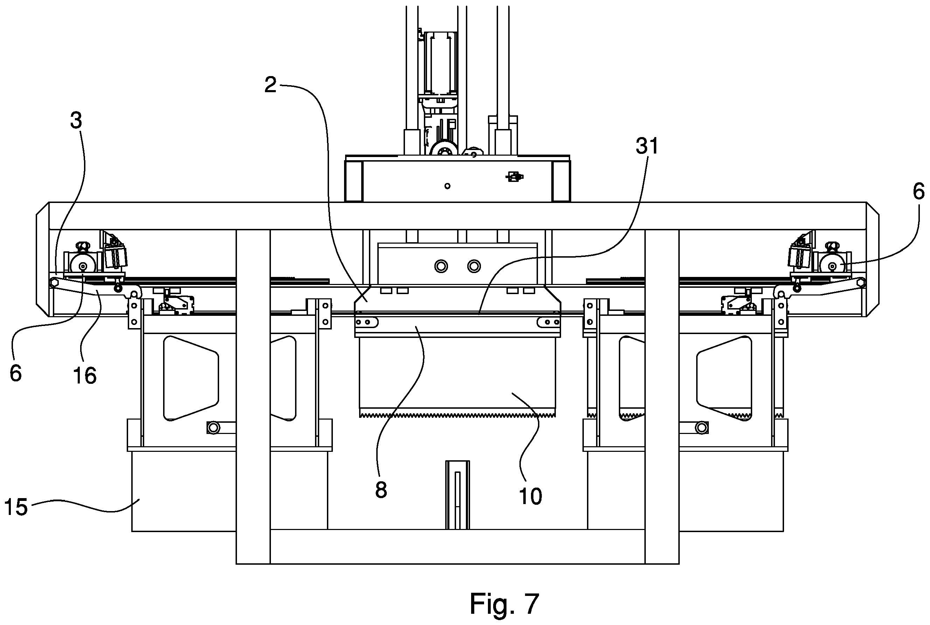

If on the other hand, the first equipment 10, arranged (above) on the first structure has to be operated, the operation proceeds in the following manner. From the configuration of figure 5, with the first and the second supporting means 8 and 13 coupled with the first and the second guiding portion 30 and 31, the first engaging means 11 is moved to the disengagement position (i.e. is raised), so that the first supporting means 8 (thus also the first equipment 10) is no longer engaged with the first shuttle means 3. At this point the first shuttle means 3 is made to retreat to the second zone 5 (i.e. returning to the rest position far from the loading position). This involves moving the second supporting means 13 and the corresponding second equipment 15 (the second engaging means 16 still being in the engagement position) thus leaving the first supporting means 8 and the corresponding first equipment 10 in the first zone 4, i.e. in the loading position (the first engaging means 11 being in the disengagement position), arriving at the configuration of figure 7.

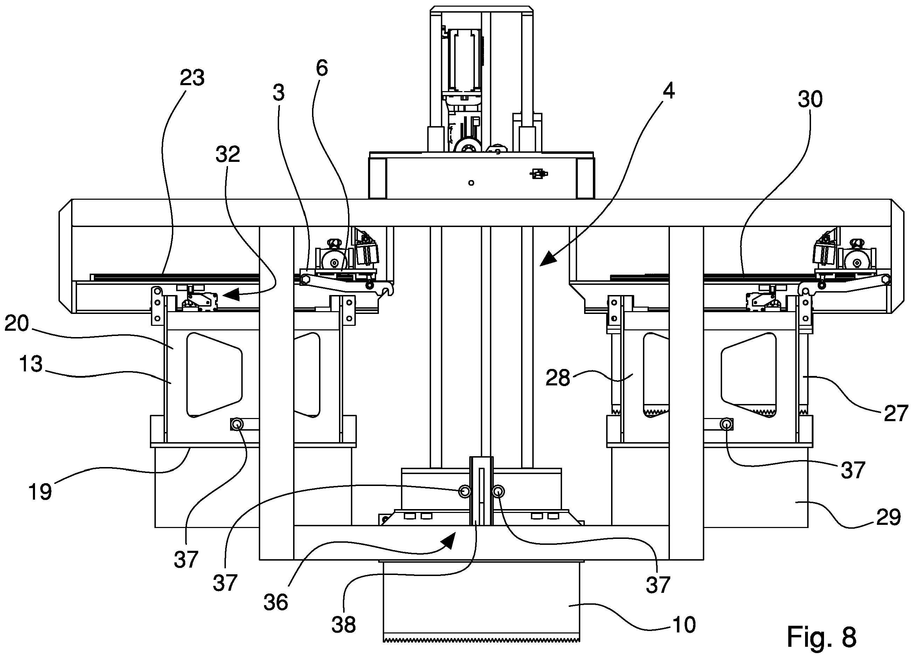

The plug assist plate 2 will thus now be able to be lowered, driven by the motor means (of known type) thereof, to go to the work position, taking with it the first equipment 10, in such a manner that the latter is enabled for work (figure 8).

Also in this case, as for the equipment 15, the equipment 10 may be provided with a centering device 36 with revolving elements 37 coupled slidably with the aforesaid reference means 38 (figure 8).

In order to select selectively the third or the fourth equipment 27 or 29, arranged on the second structure (to the right in figure 3), the same operations can be performed as those above disclosed with reference to the first and to the second equipment 10 and 15.

## Claims

1. Thermoforming apparatus (1) comprising at least one plug assist plate (2) that is movable in a movement axis, said plug assist plate being arranged for receiving at least one equipment and for transferring said equipment to a work position, said apparatus (1) comprising a loading device for loading equipment on the plug assist plate (2),
the thermoforming apparatus being **characterized in** comprising:
- first shuttle means (3) that is movable at least between a first zone (4) and a second zone (5) that is far from said first zone (4);
- first supporting means (8) that is movable at least between said first zone (4) and said second zone (5);
- a first equipment (10) supported by said first supporting means (8);
- first engaging means (11) arranged for adopting at least one engagement position and at least one disengagement position wherein said first shuttle means (3) is, or, respectively, is not engaged with said first supporting means (8) and with said first equipment (10) to drag or not to drag the first supporting means (8) between said first zone (4) and second zone (5);
- second supporting means (13) that is movable at least between said first zone (4) and said second zone (5);
- a second equipment (15) supported by said second supporting means (13);
- second engaging means (16) arranged for adopting at least one engagement position and a disengagement position wherein said first shuttle means (3) is, or, respectively, is not engaged with said second supporting means (13) and with said second equipment (15) to drag or not to drag the second supporting means (13) between said first zone (4) and second zone (5);
said first engaging means (11) and said second engaging means (16) being drivable independently of one another.

2. Apparatus according to claim 1, wherein said first engaging means (11) comprises at least one first movable member carried by said first shuttle means (3) and provided with at least one ridge/groove intended for removable joint coupling with a corresponding groove/ridge carried by said first supporting means (8) and/or by said first equipment (10).

3. Apparatus according to claim 2, wherein said first movable member is rotatable around a rotating pin (12).

4. Apparatus according to any preceding claim, wherein said second engaging means (16) at least one second movable member carried by said first shuttle means (3) and provided with at least one ridge/groove intended for removable joint coupling with a corresponding groove/ridge carried by said second supporting means (13) and/or by said second equipment (15).

5. Apparatus according to claim 4, wherein said second movable member is rotatable around a rotating pin (17).

6. Apparatus according to any preceding claim, wherein said second supporting means (13) comprises a distal portion (18) arranged far from said second equipment (15), a proximal portion (19) arranged near said second equipment (15) and connecting means (20) arranged for connecting together said distal portion (18) and said proximal portion (19), said first equipment (10) being arranged at least partly in a space located at a height comprised between said distal portion (18) and said proximal portion (19), said connecting means (20) being arranged externally on at least one side of said first equipment (10) so as not to interfere therewith during a movement of said first or second supporting means (8; 13) between said first and second zone (4; 5).

7. Apparatus according to any preceding claim, wherein said first shuttle means (3) comprises two movable carriages (6) each of which is driven by a respective motor (7), said two motors (7) being connected together by electronic control means arranged for moving jointly said two carriages.

8. Apparatus according to any preceding claim, comprising first actuator means (21) carried by said first shuttle means (3) to drive the movement of said first engaging means (11) between said engagement and disengagement positions and second actuator means (22) carried by said first shuttle means (3) to drive the movement of said second engaging means (16) between said engagement and disengagement positions.

9. Apparatus according to any preceding claim, wherein said first supporting means (8) and said second supporting means (13) are movable parallel to the movement of said first shuttle means (3).

10. Apparatus according to any preceding claim, comprising:
- second shuttle means (24) that is movable at least between said first zone (4) and a third zone (25) that is far from said first zone (4) and from said second zone (5);
- third supporting means (26) that is movable at least between said first zone (4) and said third zone (25);
- a third equipment (27) supported by said third supporting means (26);
- third removable engaging means arranged for adopting at least one engagement position and at least one disengagement position wherein, respectively, said second shuttle means (24) is or is not engaged with said third supporting means (26) and/or with said third equipment (27) to drag or not to drag the third supporting means (26) between said first zone (4) and third zone (25).

11. Apparatus according to claim 10, comprising:
- fourth supporting means (28) that is movable at least between said first zone (4) and said third zone (25);
- a fourth equipment (29) supported by said fourth supporting means (28);
- fourth removable engaging means arranged for adopting at least one engagement position and at least one disengagement position wherein, respectively, said second shuttle means (24) is or is not engaged with said fourth supporting means (28) and/or with said fourth equipment (29) to drag or not to drag the fourth supporting means (28) between said first zone (4) e third zone (25).

12. Apparatus according to claim 11, comprising first, second, third and fourth guiding means on which move, respectively, said first, second, third e fourth supporting means, wherein:
- said first and third guiding means have in common, at said first zone (4), at least one shared first guiding portion (30), said first guiding portion (30) being movable together with said plug assist plate (2) in said movement axis;
- said second and fourth guiding means have in common, at said first zone (4), at least one shared second guiding portion (31), said second guiding portion (31) being movable together with said plug assist plate (2) in said movement axis.

13. Apparatus according to any preceding claim, comprising:
- fixed reference means (38) arranged for receiving a centring device (36) of said equipment in said work position; and/or
- a removable fixing system (32) for preventing said equipment performing a movement with respect to said plug assist plate in a direction that is transverse to said movement axis during the transfer of said equipment to said work position.

14. Use of a thermoforming apparatus according to any one of claims 1 to 13, wherein said first equipment (10) and said second equipment (15) are loaded on said plug assist plate (2) in said first zone (4).

## Patentansprüche

1. Thermoformvorrichtung (1) mit wenigstens einer Stopfenunterstützungsplatte (2), die in einer Bewegungsachse beweglich ist, wobei die Stopfenunterstützungsplatte dazu angeordnet ist, wenigstens eine Einrichtung zu erhalten und die Einrichtung in eine Arbeitsposition zu überführen, wobei die Vorrichtung (1) eine Ladeeinrichtung zum Laden einer Einrichtung auf die Stopfenunterstützungsplatte (2) aufweist, wobei die Thermoformvorrichtung **dadurch gekennzeichnet ist, dass** sie Folgendes aufweist:
- ein erstes Schlittenmittel (3), das wenigstens zwischen einer ersten Zone (4) und einer zweiten Zone (5) beweglich ist, die weit von der ersten Zone (4) entfernt ist;
- ein erstes Stützmittel (8), das wenigstens zwischen der ersten Zone (4) und der zweiten Zone (5) beweglich ist;
- eine erste Einrichtung (10), die von dem ersten Stützmittel (8) aufgenommen ist,
- ein erstes Eingriffsmittel (11), das dazu angeordnet ist, wenigstens eine Eingriffsposition einzunehmen und wenigstens eine Löseposition, in der das erste Schlittenmittel (3) mit dem ersten Stützmittel (8) und mit der ersten Einrichtung (10) in Eingriff ist, oder nicht, um das erste Stützmittel (8) zwischen der ersten Zone (4) und der zweiten Zone (5) zu ziehen, oder nicht;
- ein zweites Stützmittel (13), das wenigstens zwischen der ersten Zone (4) und der zweiten Zone (5) beweglich ist;
- eine zweite Einrichtung (15), die von dem zweiten Stützmittel (13) aufgenommen ist;
- ein zweites Eingriffsmittel (16), das angeordnet ist, um wenigstens eine Eingriffsposition und eine Löseposition einzunehmen, wobei das erste Schlittenmittel (3) im Eingriff mit dem zweiten Stützmittel (13) und mit der zweiten Einrichtung (15) ist, oder nicht, um das zweite Stützmittel (13) zwischen der ersten Zone (4) und der zweiten Zone (5) zu ziehen, oder nicht;
wobei das erste Eingriffsmittel (11) und das zweite Eingriffsmittel (16) unabhängig voneinander antreibbar sind.

2. Vorrichtung nach Anspruch 1, bei der das erste Eingriffsmittel (11) wenigstens ein erstes bewegliches Element aufweist, das von dem ersten Schlittenmittel (3) getragen ist und mit wenigstens einem Grat/einer Nut versehen ist, um eine lösbare Verbindungskupplung mit einer zugeordneten Nut/einem zugeordneten Grat zu ermöglichen, was von dem ersten Stützmittel (8) und/oder durch die erste Einrichtung (10) getragen wird.

3. Vorrichtung nach Anspruch 2, bei der das erste bewegliche Element um einen Drehstift (12) drehbar ist.

4. Vorrichtung nach irgendeinem vorhergehenden Anspruch, bei der das zweite Eingriffsmittel (16) von wenigstens einem zweiten beweglichen Element getragen ist, das von dem ersten Schlittenmittel (3) getragen ist, und mit wenigstens einem Grat/einer Nut versehen ist, um eine bewegliche Verbindungskupplung mit einer zugeordneten Nut/einem zugeordneten Grat zu schaffen, was von dem zweiten Stützmittel (13) und/oder der zweiten Einrichtung (15) getragen ist.

5. Vorrichtung nach Anspruch 4, bei der das zweite bewegliche Element um einen Drehstift (17) drehbar ist.

6. Vorrichtung nach irgendeinem vorhergehenden Anspruch, bei der das zweite Stützmittel (13) einen entfernten Bereich (18) aufweist, der von der zweiten Einrichtung (15) weit entfernt ist, wobei ein nahe gelegener Abschnitt (19) in der Nähe der zweiten Einrichtung (15) angeordnet und ein Verbindungsmittel (20) zum Verbinden mit dem entfernten Abschnitt (18) und dem nahe gelegenen Bereich (19) vorgesehen ist, wobei die erste Einrichtung (10) wenigstens teilweise in einem Raum auf einer Höhe angeordnet ist, die zwischen dem entfernten Abschnitt (18) und dem nahe gelegenen Abschnitt (19) vorgesehen ist, wobei das Verbindungsmittel (20) extern an wenigstens einer Seite der ersten Einrichtung (10) angeordnet ist, um dieses während einer Bewegung des ersten oder des zweiten Stützmittels (8; 13) zwischen der ersten und der zweiten Zone (4; 5) nicht zu behindern.

7. Vorrichtung nach irgendeinem vorhergehenden Anspruch, bei der das erste Schlittenmittel (3) zwei bewegliche Schlitten (6) aufweist, von denen jeder durch einen entsprechenden Motor (7) angetrieben ist, wobei die beiden Motoren (7) miteinander durch ein elektronisches Steuermittel verbunden sind, das vorgesehen ist, um die beiden Schlitten gemeinsam zu bewegen.

8. Vorrichtung nach irgendeinem vorhergehenden Anspruch, umfassend ein erstes Aktuatormittel (21), das von dem ersten Schlittenmittel (3) getragen ist, um die Bewegung des ersten Eingriffsmittels (11) zwischen der Eingriffsposition und der Löseposition anzutreiben, und ein zweites Aktuatormittel (22), das von dem ersten Schlittenmittel (3) getragen ist, um die Bewegung des zweiten Eingriffsmittels (16) zwischen der Eingriffsposition und der Löseposition anzutreiben.

9. Vorrichtung nach irgendeinem vorhergehenden Anspruch, bei der das erste Stützmittel (8) und das zweite Stützmittel (13) parallel zu der Bewegung des ersten Schlittenmittels (3) beweglich sind.

10. Vorrichtung nach irgendeinem vorhergehenden Anspruch, das Folgendes aufweist:
- ein zweites Schlittenmittel (24), das wenigstens zwischen der ersten Zone (4) und einer dritten Zone (25) beweglich ist, die von der ersten Zone (4) und von der zweiten Zone (5) weit entfernt ist;
- ein drittes Stützmittel (26), das wenigstens zwischen der ersten Zone (4) und der dritten Zone (25) beweglich ist;
- eine dritte Einrichtung (27), die von dem dritten Stützmittel (26) getragen ist;
- ein drittes entfernbares Eingriffsmittel, das dazu angeordnet ist, wenigstens eine Eingriffsposition und wenigstens eine Löseposition einzunehmen, wobei das zweite Schlittenmittel (24) im Eingriff mit dem dritten Stützmittel (26) und/oder mit der dritten Einrichtung (27) ist, oder nicht, um das dritte Stützmittel (26) zwischen der ersten Zone (4) und der dritten Zone (25) zu ziehen, oder nicht zu ziehen.

11. Vorrichtung nach Anspruch 10, die Folgendes aufweist:
- ein viertes Stützmittel (28), das wenigstens zwischen der ersten Zone (4) und der dritten Zone (25) beweglich ist;
- eine vierte Einrichtung (29), die von dem vierten Stützmittel (28) aufgenommen ist;
- ein viertes entfernbares Eingriffsmittel, das dazu angeordnet ist, wenigstens eine Eingriffsposition und wenigstens eine Löseposition einzunehmen, wobei das zweite Schlittenmittel (24) mit dem vierten Stützmittel (28) und/oder mit der vierten Einrichtung (29) im Eingriff ist oder nicht, um das vierte Stützmittel (28) zwischen der ersten Zone (4) und der dritten Zone (25) zu ziehen oder nicht zu ziehen.

12. Vorrichtung nach Anspruch 11, umfassend ein erstes, ein zweites, ein drittes und ein viertes Führungsmittel, worauf sich das erste, das zweite, das dritte und das vierte Stützmittel jeweils bewegt, wobei:
- das erste und das dritte Führungsmittel an der ersten Zone (4) wenigstens einen gemeinsamen ersten Führungsbereich (30) haben, wobei der erste Führungsbereich (30) zusammen mit dem ersten Stopfen und der Stützungsplatte (2) in der Bewegungsachse beweglich ist;
- das zweite und das vierte Führungsmittel an der ersten Zone (4) wenigstens einen gemeinsamen zweiten Führungsbereich (31) haben, wobei der zweite Führungsbereich (31) zusammen mit der Stopfenunterstützungsplatte (2) in der Bewegungsachse beweglich ist.

13. Vorrichtung nach irgendeinem vorhergehenden Anspruch, die Folgendes aufweist:
- ein festes Referenzmittel (38), das dazu angeordnet ist, eine Zentriereinrichtung (36) der Einrichtung in der Arbeitsposition aufzunehmen; und/oder
- ein entfernbares Fixiersystem (32), um zu verhindern, dass die Einrichtung eine Bewegung in Bezug auf die Stopfenunterstützungsplatte in einer Richtung ausführt, die quer zu der Bewegungsachse während der Bewegung der Einrichtung zu der Arbeitsposition ist.

14. Verwendung einer Thermoformvorrichtung gemäß irgendeinem der Ansprüche 1 bis 13, wobei der die erste Einrichtung (10) und die zweite Einrichtung (15) auf der Stopfenunterstützungsplatte (2) in der ersten Zone (4) geladen sind.

## Revendications

1. Appareil de thermoformage (1) comprenant au moins une plaque auxiliaire à prise (2) qui est mobile dans un axe de déplacement, ladite plaque auxiliaire à prise étant agencée pour recevoir au moins un équipement et pour transférer ledit équipement dans une position de travail, ledit appareil (1) comprenant un dispositif de chargement pour charger un équipement sur la plaque auxiliaire à prise (2), l'appareil de thermoformage étant **caractérisé en ce qu'**il comprend :
- des premiers moyens de navette (3) qui sont mobiles au moins entre une première zone (4) et une deuxième zone (5) qui est éloignée de ladite première zone (4) ;
- des premiers moyens de support (8) qui sont mobiles au moins entre ladite première zone (4) et ladite deuxième zone (5) ;
- un premier équipement (10) supporté par lesdits premiers moyens de support (8) ;
- des premiers moyens de prise (11) agencés pour adopter au moins une position de prise et au moins une position dégagée, dans lesquels lesdits premiers moyens de navette (3) sont ou, respectivement, ne sont pas en prise avec lesdits premiers moyens de support (8) et avec ledit premier équipement (10) pour tirer ou ne pas tirer les premiers moyens de support (8) entre ladite première zone (4) et la deuxième zone (5) ;
- des deuxièmes moyens de support (13) qui sont mobiles au moins entre ladite première zone (4) et ladite deuxième zone (5) ;
- un deuxième équipement (15) supporté par lesdits deuxièmes moyens de support (13) ;
- des deuxièmes moyens de prise (16) agencés pour adopter au moins une position de prise et une position dégagée, dans lesquels lesdits premiers moyens de navette (3) sont ou, respectivement, ne sont pas en prise avec lesdits deuxièmes moyens de support (13) et avec ledit deuxième équipement (15) pour tirer ou ne pas tirer les deuxièmes moyens de support (13) entre ladite première zone (4) et la deuxième zone (5) ;
lesdits premiers moyens d'engagement (11) et lesdits deuxièmes moyens d'engagement (16) étant aptes à être entraînés indépendamment l'un de l'autre.

2. Appareil selon la revendication 1, dans lequel lesdits premiers moyens d'engagement (11) comprennent au moins un premier organe mobile porté par lesdits premiers moyens de navette (3) et pourvu d'au moins une nervure/rainure destinée à l'accouplement d'assemblage amovible avec une rainure/nervure correspondante portée par lesdits premiers moyens de support (8) et/ou par ledit premier équipement (10).

3. Appareil selon la revendication 2, dans lequel ledit premier organe mobile est apte à tourner autour d'un axe de rotation (12).

4. Appareil selon l'une quelconque des revendications précédentes, dans lequel lesdits deuxièmes moyens d'engagement (16) comprennent au moins un deuxième organe mobile porté par lesdits premiers moyens de navette (3) et pourvu d'au moins une nervure/rainure destinée à l'accouplement d'assemblage amovible avec une rainure/nervure correspondante portée par lesdits deuxièmes moyens de support (13) et/ou par ledit deuxième équipement (15).

5. Appareil selon la revendication 4, dans lequel ledit deuxième organe mobile est apte à tourner autour d'un axe de rotation (17).

6. Appareil selon l'une quelconque des revendications précédentes, dans lequel lesdits deuxièmes moyens de support (13) comprennent une partie distale (18) disposée loin dudit deuxième équipement (15), une partie proximale (19) disposée près dudit deuxième équipement (15), et des moyens de liaison (20) agencés pour relier entre elles ladite partie distale (18) et ladite partie proximale (19), ledit premier équipement (10) étant disposé au moins en partie dans un espace situé à une hauteur comprise entre ladite partie distale (18) et ladite partie proximale (19), lesdits moyens de liaison (20) étant disposés extérieurement sur au moins un côté dudit premier équipement (10) de manière à ne pas gêner celui-ci pendant un déplacement desdits premiers ou deuxièmes moyens de support (8 ; 13) entre lesdites première et deuxième zones (4 ; 5).

7. Appareil selon l'une quelconque des revendications précédentes, dans lequel lesdits premiers moyens de navette (3) comprennent deux chariots mobiles (6) entraînés chacun par un moteur respectif (7), lesdits deux moteurs (7) étant reliés entre eux par des moyens de commande électroniques agencés pour déplacer conjointement lesdits deux chariots.

8. Appareil selon l'une quelconque des revendications précédentes, comprenant des premiers moyens actionneurs (21) portés par lesdits premiers moyens de navette (3) pour entraîner le déplacement desdits premiers moyens de prise (11) entre lesdites positions de prise et de dégagement, et des deuxièmes moyens actionneurs (22) portés par lesdits premiers moyens de navette (3) pour entraîner le déplacement desdits deuxièmes moyens de prise (16) entre lesdites positions de prise et de dégagement.

9. Appareil selon l'une quelconque des revendications précédentes, dans lequel lesdits premiers moyens de support (8) et lesdits deuxièmes moyens de support (13) sont mobiles parallèlement au déplacement desdits premiers moyens de navette (3).

10. Appareil selon l'une quelconque des revendications précédentes, comprenant :
- des deuxièmes moyens de navette (24) qui sont mobiles au moins entre une première zone (4) et une troisième zone (25) qui est éloignée de ladite première zone (4) et de ladite deuxième zone (5) ;
- des troisièmes moyens de support (26) qui sont mobiles au moins entre ladite première zone (4) et ladite troisième zone (25) ;
- un troisième équipement (27) supporté par lesdits troisièmes moyens de support (26) ;
- des troisièmes moyens de prise amovibles agencés pour adopter au moins une position de prise et au moins une position dégagée, dans lesquels, respectivement, lesdits deuxièmes moyens de navette (24) sont ou ne sont pas en prise avec lesdits troisièmes moyens de support (26) et/ou avec ledit troisième équipement (27) pour tirer ou ne pas tirer les troisièmes moyens de support (26) entre ladite première zone (4) et la troisième zone (25).

11. Appareil selon la revendication 10, comprenant :
- des quatrièmes moyens de support (28) qui sont mobiles au moins entre ladite première zone (4) et ladite troisième zone (25) ;
- un quatrième équipement (29) supporté par lesdits quatrièmes moyens de support (28) ;
- des quatrièmes moyens de prise mobiles agencés pour adopter au moins une position de prise et au moins une position dégagée, dans lesquels, respectivement, lesdits deuxièmes moyens de navette (24) sont ou ne sont pas en prise avec lesdits quatrièmes moyens de support (28) et/ou avec ledit quatrième équipement (29) pour tirer ou ne pas tirer les quatrièmes moyens de support (28) entre ladite première zone (4) et la troisième zone (25).

12. Appareil selon la revendication 11, comprenant des premiers, deuxièmes, troisièmes et quatrièmes moyens de guidage sur lesquels se déplacent respectivement lesdits premiers, deuxièmes, troisièmes et quatrièmes moyens de support, dans lequel :
- lesdits premiers et troisièmes moyens de guidage ont en commun, sur ladite première zone (4), au moins une première partie de guidage partagée (30), ladite première partie de guidage (30) étant mobile avec ladite plaque auxiliaire à prise (2) dans ledit axe de déplacement ;
- lesdits deuxièmes et quatrièmes moyens de guidage ont en commun, sur ladite première zone (4), au moins une deuxième partie de guidage partagée (31), ladite deuxième partie de guidage (31) étant mobile avec ladite plaque auxiliaire à prise (2) dans ledit axe de déplacement.

13. Appareil selon l'une quelconque des revendications précédentes, comprenant :
- des moyens de référence fixes (38) agencés pour recevoir un dispositif de centrage (36) dudit équipement dans ladite position de travail ; et/ou
- un système de fixation amovible (32) pour empêcher ledit équipement d'effectuer un déplacement par rapport à ladite plaque auxiliaire à prise dans une direction qui est transversale par rapport audit axe de déplacement pendant le transfert dudit équipement jusqu'à ladite position de travail.

14. Utilisation d'un appareil de thermoformage selon l'une quelconque des revendications 1 à 13, dans laquelle ledit premier équipement (10) et ledit deuxième équipement (15) sont chargés sur ladite plaque auxiliaire à prise (2) dans ladite première zone (4).
